# EUROPÄISCHE PATENTSCHRIFT

(11) **EP 2 476 961 B1**
(45) Veröffentlichungstag und Bekanntmachung des Hinweises auf die Patenterteilung: **24.07.2019**
(21) Anmeldenummer: 11401630.6
(22) Anmeldetag: 18.11.2011
(51) Int. Cl.: F24C 15/32, A21B 3/04, F22B 1/28

(54) **Gargerät**
Cooking device
Appareil de cuisson

(30) Priorität: 06.12.2010 DE 102010061029
(43) Veröffentlichungstag der Anmeldung: 18.07.2012
(73) Patentinhaber: Miele & Cie. KG, 33332 Gütersloh (DE)
(72) Erfinder: Becker, Torben, 33613 Bielefeld (DE)

(56) Entgegenhaltungen:
- EP-A1- 1 669 668
- EP-A2- 2 244 010
- WO-A1-2009/157480
- DE-A1- 4 001 778
- DE-A1-102007 024 007
- DE-C1- 10 109 251

## Beschreibung

Die vorliegende Erfindung betrifft ein Gargerät mit einem Garraum, der mittels verschiedener Betriebsarten wie zum Beispiel Oberhitze, Unterhitze oder Umluft beheizt werden kann. Zusätzlich ist eine Verdampfungseinrichtung vorgesehen.

Die Weiterentwicklungen im Bereich von Gargeräten sind nicht nur auf einen besseren Komfort ausgerichtet, sondern auch dahin gehend, verschiedenste Garprozesse weiter zu optimieren. Auch für private Küchen werden daher Küchengeräte angeboten, die früher nur aus dem professionellen Bereich bekannt waren. Solche modernen Küchengeräte können das Kochen und Backen nicht nur erheblich erleichtern, sondern sind oft mit verschiedenen Zusatzfunktionen ausgestattet, die neben einer komfortableren Bedienung auch das Ergebnis eines Garvorgangs qualitativ erheblich verbessern können.

Das Bedampfen des Garraumes kann zum Beispiel im Bereich von Gargeräten mit einem Garraum eine solche vorteilhafte Zusatzfunktion sein. Diese Funktion ermöglicht es einem Benutzer, Dampf in den Garraum einzuleiten, um die Luftfeuchtigkeit des Garprozesses auf die entsprechenden bevorzugten Bedingungen einzustellen. Zum Beispiel können beim Backen von Brot oder Brötchen die Teiglinge durch das Einbringen von Dampf in den Garraum beim Aufgehen geschmeidig gehalten werden. Durch den Dampf trocknet die Oberfläche der Teiglinge nicht so stark aus und ein eventuelles Aufreißen der Teiglinge kann so besser verhindert werden. Auch beim Garen von großen Fleischstücken, wie zum Beispiel einem Braten, kann dem Austrocknen des Garguts durch das Bedampfen des Garraumes besser entgegengewirkt werden.

Bekannte Vorrichtungen zum Einbringen von Dampf in den Garraum funktionieren zweckgemäß. Dabei wird zum Beispiel Wasser einem Dampferzeuger zugeführt und in diesem verdampft und anschließend in den Garraum eingeleitet. Nachteilig bei den bekannten Systemen ist allerdings, dass sie in regelmäßigen Abständen entkalkt werden müssen, um eine optimale Funktion weiter zu gewährleisten und um mögliche Schäden an dem Dampferzeuger oder eventuell sogar an dem Gargerät selber zu vermeiden.

Überall da, wo Wasser über 60°C erhitzt wird, setzt sich Kalk ab. Dieser setzt sich insbesondere im Bereich der Heizquelle, die zur Verdampfung verwendet wird, ab. Der sich absetzende Kalk bildet nach und nach eine Kalkschicht, die je nach Anordnung des Dampferzeugers auch abbröckeln kann. Damit das gesamte System nicht durch Kalk und Kalkablagerungen verstopft wird, müssen bekannte Systeme daher regelmäßig entkalkt werden.

Bei manchen bekannten Systemen kann es vorkommen, dass genau dann, wenn man die Funktion zum Bedampfen des Garraumes verwenden will, erst die Entkalkung durchgeführt werden muss. Zwar weisen heutzutage hochwertige Geräte rechtzeitig darauf hin, dass bald eine Entkalkung vorgenommen werden soll, dennoch kann man aus Zeitgründen das Entkalken eventuell nicht durchführen und vergisst es anschließend. Beim nächsten Bedarf an Dampf im Garraum kann es dann unter Umständen nötig sein, zunächst zu entkalken.

Abgesehen davon nimmt das Entkalken immer Zeit in Anspruch und verlangt in manchen Fällen sogar extra Zubehör, das separat gelagert werden muss. Das ist eine unerwünschte Komforteinbuße, da Wartungsarbeiten immer als lästig empfunden werden und zeitaufwändig sind. Das Gerät muss zum Entkalken oft mit einer speziellen Flüssigkeit erhitzt und anschließend aufwändig gespült werden. Auch zusätzliche Technik kann von Nöten sein, um zu ermitteln, ob und wann ein Gerät entkalkt werden muss. Das Entkalken nach einer bestimmten Anzahl von Garvorgängen mit der Benutzung von Dampf ist eher ungünstig, da die Menge an Kalk je nach verwendeter Wasserqualität stark unterschiedlich sein kann.

Aus der DE 101 09 251 C1 ist ein Dampferzeuger, insbesondere für ein Gargerät, bekannt, bei dem angesammelter Kesselstein über eine schmutzgängige Entleerpumpe zerkleinert und zu einem Ablauf geführt wird.

Es ist daher die Aufgabe der vorliegenden Erfindung, ein Gargerät zur Verfügung zu stellen, bei dem das Entkalken erheblich reduziert werden kann.

Diese Aufgabe wird gelöst durch ein Gargerät mit den Merkmalen des Anspruchs 1. Bevorzugte Weiterbildungen der Erfindung ergeben sich aus den Unteransprüchen. Weitere Vorteile und Merkmale der Erfindung sind im Ausführungsbeispiel angegeben.

Das erfindungsgemäße Gargerät weist wenigstens eine Verdampfungseinrichtung zum Bedampfen wenigstens eines Garraumes auf. Die wenigstens eine Verdampfungseinrichtung umfasst wenigstens eine Heizeinrichtung, wenigstens eine Zufuhr für Flüssigkeiten und wenigstens eine Abfuhr für Dampf. Die Abfuhr ist dazu geeignet und ausgebildet, den Dampf wenigstens teilweise in den wenigstens einen Garraum zu führen. Der Heizeinrichtung ist wenigstens eine Auffangeinrichtung für wenigstens einen Reststoff zugeordnet. Die Auffangeinrichtung eignet sich insbesondere zum Auffangen von Kalk. Eventuelle nötige Verbindungs- und Anschlusssysteme, wie zum Beispiel Schläuche oder Dampfröhrchen, werden dabei als Teil der Zufuhr bzw. Abfuhr angesehen.

Ein derart ausgestaltetes Gargerät bietet viele Vorteile. Ein erheblicher Vorteil ist, dass durch die vorgesehene Auffangeinrichtung für Reststoffe das Gargerät erheblich seltener entkalkt werden muss. Durch die Verwendung einer erfindungsgemäßen Auffangeinrichtung ist es sogar möglich, dass die Verdampfungseinrichtung des Gargerätes während der Durchschnittlichen Lebensdauer oder sogar darüber hinaus gar nicht entkalkt werden muss. Daraus resultiert ein Komfortvorteil für einen Benutzer, da diese lästige Wartungsarbeit entfällt.

Wie in herkömmlich verbauten Systemen fällt zwar immer noch Kalk in der Verdampfungseinrichtung an, dieser platzt oder bröckelt aber nach und nach ab und sammelt sich in der Auffangeinrichtung. Dadurch kann das Verstopfen des Systems durch Kalk oder Kalkanlagerungen effektiver verhindert werden.

Es ist bevorzugt, dass der wenigstens eine Garraum über wenigstens eine Heizquelle thermisch beheizbar ist. Je nachdem ob das Gargerät als Backofen, Dampfgarer, Mikrowelle oder Kombigerät ausgelegt ist, können zum Beheizen des Garraumes verschiedene Heizquellen verwendet werden. Dazu gehören zum Beispiel Unterhitze-, Oberhitze-, Umluft-, Grill- oder Mikrowellenheizquellen.

Die erfindungsgemäßen Auffangeinrichtung ist in der Art eines Töpfchens, eines Bechers oder eines Kastens ausgebildet. Allerdings sind Behältnisse mit einem in etwa runden Querschnitt besonders zweckmäßig.

Die Auffangeinrichtung ist austauschbar ausgeführt. Dazu kann die Auffangeinrichtung zum Beispiel schraub-, klemm- oder steckbar gefertigt sein, wodurch auch die Ausführung der Auffangeinrichtung in verschiedenen Größen denkbar ist. Dadurch wird es möglich, die Größe der Auffangeinrichtung an verschiedene Begebenheiten und Bedingungen optimal anzupassen. Durch eine austauschbar ausgeführte Auffangeinrichtung kann diese zum Beispiel auch einfach gewechselt werden, sollte die Aufnahmekapazität einmal nicht ausreichen und ein Austausch nötig oder sinnvoll werden.

Um das lästige Entkalken überflüssig zu machen, ist die Auffangeinrichtung bevorzugterweise dazu geeignet und ausgebildet, wenigstens die in einer vorbestimmten Zeit erwartete Menge eines Reststoffes aufzunehmen. Dabei bezieht sich die erwartete Menge eines Reststoffs auf die Lebensdauer des Gerätes.

Um diese Menge zu ermitteln, werden verschiedene Parameter berücksichtigt. Zum Beispiel wird ein durchschnittlicher Betrieb des Backofens unter Verwendung der Verdampfungsfunktion für alle 2, 3, 4, 5 Tage oder eventuell sogar jeden Tag angenommen. Dies wird auf eine durchschnittliche Lebensdauer eines Gargerätes von zum Beispiel ca. 1, 2, 3, 4, 5 oder 10 Jahren oder mehr hochgerechnet. Die bei einer solchen Benutzung entstehende Menge an Reststoff, insbesondere Kalk, wird auch unter Berücksichtigung verschiedener Härtegrade des Wassers der Größengestaltung der Auffangeinrichtung zu Grunde gelegt.

Vorzugsweise beheizt die Heizeinrichtung einen im Wesentlichen von unten nach oben verlaufenden Verdampfungsbereich. Dieser Verdampfungsbereich kann durch ein im Wesentlichen senkrechtes bzw. vertikales Rohr zur Verfügung gestellt werden. Ein solches Rohr kann auch leicht schräg oder schräg stehen und/oder teilweise auch horizontale Abschnitte aufweisen. Der Verdampfungsbereich sollte insbesondere sehr glatt gefertigt sein, damit sich anlagernde Kalkschichten leicht abplatzen können. Daher eignet sich als Material für den Verdampfungsbereich Metall, insbesondere Edelstahl. Natürlich sind auch Kunststoffe mit entsprechenden Eigenschaften verwendbar. Dabei sollte allerdings insbesondere auf die Hitzebeständigkeit des verwendeten Werkstoffs geachtet werden.

In vorteilhaften Ausgestaltungen ist die Heizeinrichtung insbesondere außen an dem Verdampfungsbereich angeordnet. Dabei umfasst die Heizeinrichtung besonders bevorzugt wenigstens eine Heizwendel oder ist besonders bevorzugt als Heizwendel ausgeführt. Die Heizeinrichtung ist so an dem Verdampfungsbereich angeordnet, dass eine ausreichende Wärmeübertragung gewährleistet ist. Neben einer Heizwendel sind auch zum Beispiel Heizmanschetten, Heizplatten oder ähnliche zweckmäßige Heizeinrichtungen vorstellbar.

Um ein Überhitzen des Systems effektiv zu verhindern, ist in bevorzugten Ausgestaltungen der Heizeinrichtung wenigstens ein Sensor zugeordnet. Dieser kann insbesondere als Regelthermostat ausgelegt sein, der das System auf ein Temperaturniveau von ca. 170° Celsius regelt. Dazu kann auch eine Steuereinrichtung vorgesehen sein. Natürlich sind auch andere Temperaturbereiche möglich und vorteilhaft. Jede geeignete Temperatur, jede geeignete Taktung bzw. jeder geeignete Temperaturverlauf kann für die Verdampfungseinrichtung verwendet werden.

Bei einer solchen Ausgestaltung des Verdampfungsbereiches kann es unter Umständen immer wieder zu unerwünschten Dampfstößen durch Siedeverzug kommen. Daher ist in bevorzugten Ausgestaltungen oberhalb des Verdampfungsbereichs wenigstens ein Tröpfchenabscheider angeordnet. Dieser kann zum Beispiel ein Silikonformteil sein, der durch Dampfstöße entstehende Tropfen effektiv von der Abfuhr für Dampf fern hält. So kann verhindert werden, dass unverdampfte Flüssigkeit in den Garraum gelangt oder auch die Verbindung zwischen Abfuhr und Garraum blockiert.

Vorzugsweise ist die Auffangeinrichtung unterhalb der Heizeinrichtung und/oder unterhalb der Zufuhr für Flüssigkeiten angeordnet. Die Orientierung der Auffangeinrichtung bezieht sich natürlich auf den Betriebszustand. Durch eine solche Anordnung der Auffangeinrichtung ist gewährleistet, dass sich abbröckelnder Kalk nur in der Auffangeinrichtung ansammeln kann, sodass sich keine Verstopfungen im Verdampfungsbereich oder in der Zufuhr für Flüssigkeiten bilden können.

Besonders bevorzugt ist die Zufuhr für Flüssigkeiten unterhalb der Heizeinrichtung angeordnet. Über diese Zufuhr kann in besonders bevorzugten Ausgestaltungen mittels einer Zuführeinrichtung, die auch eine Pumpe umfassen kann, eine vorbestimmte Flüssigkeitsmenge der Verdampfungseinrichtung zugeführt werden. Dabei kann die Versorgung mit Flüssigkeit über zum Beispiel einen Festwasseranschluss erfolgen, aber auch die Verwendung von Vorratsbehältern ist denkbar und bevorzugt. Dabei kann ein Vorratsbehälter an jeder beliebigen Stelle des Gargerätes vorgesehen sein.

Besonders bevorzugt ist dieser Vorratsbehälter zum Beispiel an das Gargerät ansteckbar. Dazu können Fixierungsstäbe an dem Vorratsbehälter vorgesehen sein, die beispielsweise in entsprechende Aufnahmen zwischen Bedienblende und Ofentür eingeschoben werden können. Eine denkbare Ausgestaltung wäre hierbei ein Plexiglas-, Kunststoff oder Metalltank, der über eine entsprechende Ventiladaptierung mit der Zuführeinrichtung verbunden ist. So kann eine gewünschte Menge an Flüssigkeit auf einmal in den Vorratsbehälter eingefüllt werden, die dann zum Beispiel nach und nach mittels der Pumpe der Verdampfungseinrichtung zur Verdampfung zur Verfügung gestellt wird.

Weitere Vorteile und Merkmale der vorliegenden Erfindung ergeben sich aus dem Ausführungsbeispiel, welches im Folgenden mit Bezug auf die beiliegenden Figuren erläutert wird. Dabei zeigt:
- Figur 1: eine schematische perspektivische Ansicht eines erfindungsgemäßen Gargerätes, das als Backofen ausgeführt ist;
- Figur 2: eine schematische Darstellung eines Ausführungsbeispiels einer erfindungsgemäßen Verdampfungseinrichtung für den Backofen nach Figur 1;
- Figur 3: eine schematische Schnittdarstellung durch das in Figur 2 gezeigte Ausführungsbeispiel;
- Figur 4: eine schematische Schnittdarstellung durch eine erfindungsgemäße Verdampfungseinrichtung mit stark schematisch dargestelltem abgelagerten Reststoff; und
- Figur 5: eine schematische Darstellung eines Vorratsbehälters zum Anstecken an das Gargerät.

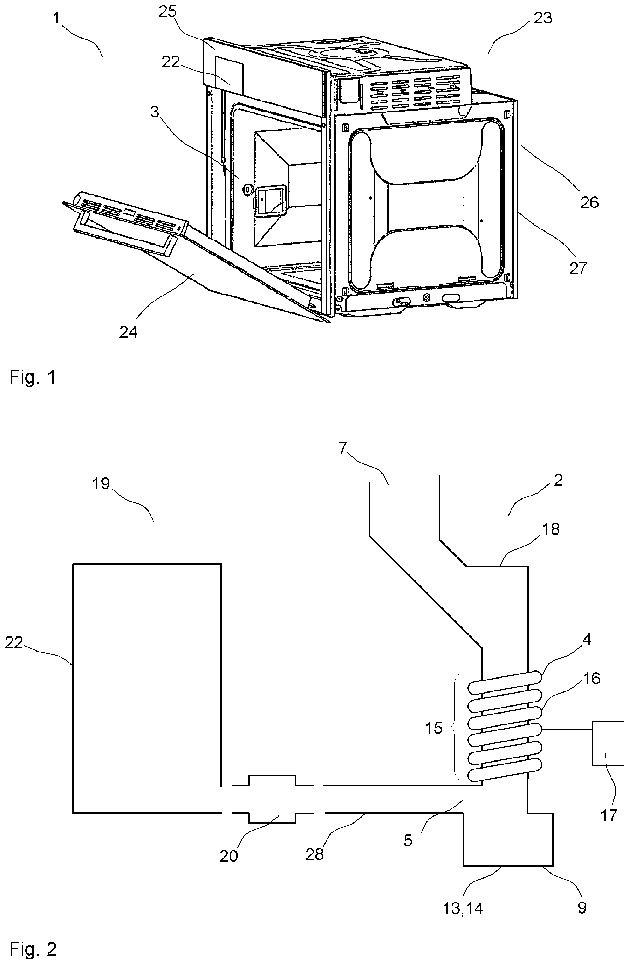

Figur 1 zeigt ein erfindungsgemäßes Gargerät 1, dass im vorliegenden Fall als Backofen 23 ausgeführt ist. Der Backofen 23 weist einen Garraum 3 auf, der mit einer Tür 24 verschließbar ist. In dem Garraum 3 können Speisen unter Verwendung verschiedener Betriebsprofile zubereitet werden. Über ein Bedienfeld 25, das wie hier als Touchpanel ausgeführt ist, können verschiedene Betriebsparameter eingestellt werden. Unter anderem kann zwischen Umluftbetrieb, Ober- und Unterhitze und einer Grillfunktion gewählt werden und die Temperatur ist einstellbar. Auch das Bedampfen des Garraumes wird über dieses Bedienfeld gesteuert. Es ist möglich, dass für diese Funktion kann auch ein separates Bedienelement vorgesehen ist. Das Bedienfeld 23 kann weiterhin auch nicht näher dargestellte Bedienelemente umfassen.

In vielen Fällen ist es für das Ergebnis eines Garprozesses vorteilhaft, den Garraum 3 während des Garvorgangs zu bedampfen. Dadurch kann das Austrocknen von Lebensmitteln, wie zum Beispiel großen Fleischstücken, besser verhindert werden. Insbesondere auch beim Backen von Brot oder Brötchen kann das Bedampfen während der Gehzeit des Teiges zu einem besseren Ergebnis führen, da die höhere Luftfeuchtigkeit die Oberfläche der Teiglinge geschmeidig hält, so dass diese nicht so schnell aufreißen.

Um den Garraum 2 des Backofens 23 zu bedampfen, ist an der hinteren Wand 26 des Gehäuses 27 eine in Figur 1 nicht sichtbare erfindungsgemäße Verdampfungseinrichtung 2 angeordnet. Ein Ausführungsbeispiel einer solchen erfindungsgemäßen Verdampfungseinrichtung 2 ist in den Figur 2 - 4 dargestellt.

Die erfindungsgemäße Ausführung einer Verdampfungseinrichtung 2 umfasst, wie schematisch in Figur 2 gezeigt, eine Zufuhr 5 und eine Abfuhr 7. Die Zufuhr 5 eignet sich dazu, der Verdampfungseinrichtung Flüssigkeiten 6 zuzuführen. Die Abfuhr 7 ist dazu geeignet und ausgebildet, den in der Verdampfungseinrichtung 2 erzeugten Dampf 8 wenigstens teilweise in den Garraum 3 zu führen. Eventuell dafür nötige Verbindungen, wie zum Beispiel Schläuche oder Dampfröhrchen, können erfindungsgemäß zu der Zufuhr und der Abfuhr dazu gehören.

Um der Verdampfungseinrichtung 2 die zu verdampfende Flüssigkeit 6 zur Verfügung zu stellen, kann auch eine Zuführeinrichtung 19 vorgesehen sein, die wieder über Schläuche, Röhrchen oder andere geeignete Verbindungen mit der Zufuhr 5 verbunden ist. In Figur 2 ist eine mögliche Zuführeinrichtung 19 dargestellt, die einen Vorratsbehälter 22, eine Pumpe 20 und entsprechende Anschlussschläuche 28 umfasst. Aus dem Vorratsbehälter wird mittels der Pumpe 20 die jeweils nötige Menge an Flüssigkeit 5 in die Verdampfungseinrichtung 2 gefördert.

Die Verdampfungseinrichtung weist zwischen der Zufuhr 5 und der Abfuhr 7 unter anderem einen im Wesentlichen vertikalen Verdampfungsabschnitt 15 auf, in dem die Flüssigkeit 6 mittels einer Heizeinrichtung 4 verdampft werden kann. Der durch die Heizeinrichtung 4 beheizte Verdampfungsabschnitt 15 verläuft im Betriebszustand vorteilhafterweise in etwa senkrecht, kann aber natürlich auch schräg orientiert sein, horizontale Abschnitte aufweisen oder zum Beispiel auch wellenförmig ausgebildet sein.

In dem hier dargestellten Ausführungsbeispiel besteht der Verdampfungsbereich 15 aus einem im Wesentlichen senkrecht angeordneten Edelstahlrohr. Natürlich ist auch die Verwendung anderer Materialien für den Verdampfungsbereich 15 denkbar. Allerdings sollte die Materialbeschaffenheit derart sein, dass eine möglichst glatte Oberfläche gefertigt werden kann, um ein Anhaften von Kalk möglichst zu vermeiden und/oder das Abplatzen vorhandener Kalkschichten zu begünstigen. Auch eine ausreichende Thermostabilität muss gewährleistet sein, da der Verdampfungsbereich 15 wie in Figur 2 gezeigt über eine Heizeinrichtung 4 aufgeheizt wird. In dem hier gezeigten Ausführungsbeispiel wird als Heizeinrichtung 4 eine Heizwendel 16 benutzt. Um eine mögliche Überhitzung zu vermeiden und um den Verdampfungsverlauf anpassen zu können, ist ein Sensor 17 vorgesehen, der auch mit einer hier nicht dargestellten Steuereinrichtung in Verbindung stehen kann.

Der Sensor kann auch als Regelthermostat ausgestaltet sein, der die Temperatur der Verdampfungseinrichtung 2 begrenzt. Dabei kann die Temperatur beispielsweise auf ca. 170°C geregelt werden. Es sind aber natürlich auch andere Temperaturen, Temperaturtaktungen oder Temperaturverläufe denkbar und sinnvoll, die eine zweckmäßige Funktion der Verdampfungseinrichtung ermöglichen.

Unterhalb des Verdampfungsbereichs 15 ist eine Auffangeinrichtung 9 angeordnet, die in dem hier gezeigten Ausführungsbeispiel auch unterhalb der Zufuhr 5 für Flüssigkeiten 6 liegt. Die Form dieser Auffangeinrichtung ist in der Art eines Bechers (13) oder eines Töpfchens (14) ausgebildet.

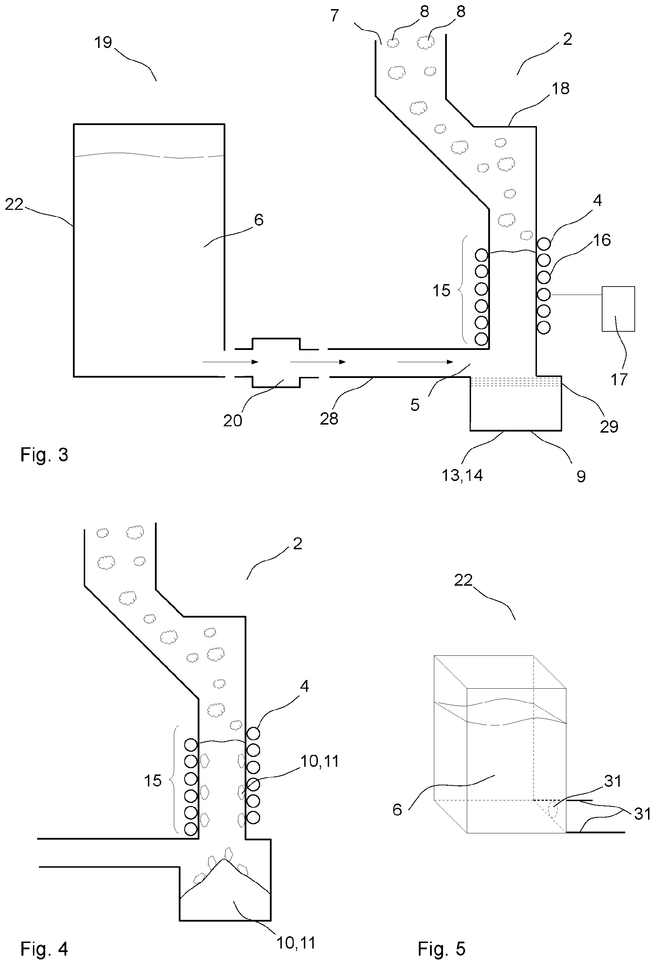

In Figur 3 ist ein Schnitt durch die erfindungsgemäße Verdampfungseinrichtung und die Zuführeinrichtung gezeigt. Die Flüssigkeit 6, die aus dem Vorratsbehälter 22 mittels der Pumpe 20 in die Verdampfungseinrichtung 2 geleitet wird, wird in dem Verdampfungsabschnitt 15 durch die Heizeinrichtung 4 verdampft. Der entstehende Dampf 8 gelangt über die Abfuhr 7 in den Garraum 3. So kann die Luftfeuchtigkeit an die gewünschten Bedingungen angepasst werden. In dem hier gezeigten Beispiel füllt sich zunächst die Auffangeinrichtung 9 komplett mit Wasser, bevor das Wasser in den Verdampfungsbereich 15 gedrückt wird. Eventuell kann es hierdurch bei einem ersten Verdampfungsvorgang zu geringfügigen Abweichungen der Dampfmenge kommen, da das Wasser in der Auffangeinrichtung 9 nicht verdampft wird.

Da es bei einer Verdampfungseinrichtung 2 mit einem so gestalteten Verdampfungsbereich 15 zu unkontrollierten Dampfstößen kommen kann, ist es zweckmäßig, dass ein Tröpfchenabscheider 18 über dem Verdampfungsbereich 15 angeordnet ist. Sollte es zu einem Dampfstoß kommen, kann das dann mit hochgerissene Wasser durch den Tröpfchenabscheider von der Abfuhr 7 ferngehalten werden, so dass keine Flüssigkeit in den Garraum gelangen kann, oder die abführenden Verbindungen durch Flüssigkeit verstopfen können.

In Figur 3 ist auch im oberen Bereich der Auffangeinrichtung 9 ein Gewinde 29 angedeutet, dass eine austauschbare Auffangeinrichtung 9 darstellt. Natürlich können austauschbare Auffangeinrichtungen 9 nicht nur geschraubt werden, sondern auch klemm- oder steckbar ausgeführt sein oder auf eine andere Art und Weise an der Verdampfungsvorrichtung befestigt werden.

Figur 4 zeigt auch einen Schnitt durch eine erfindungsgemäße Verdampfungseinrichtung 2. In dem hier gezeigten Beispiel hat sich in dem Verdampfungsbereich 15 schon an den Wänden eine Kalkschicht 11 gebildet. Teile dieser Kalkschicht sind wieder abgeplatzt und in die Auffangeinrichtung 9 gefallen. Natürlich eignet sich die Auffangeinrichtung auch zur Aufnahme von jeglichen Reststoffen 10 und Partikeln.

Dass sich in dem Verdampfungsbereich Kalk 11 bildet, ist völlig normal. Immer wenn Wasser auf über 60°C erhitzt wird, entsteht Kalk 11. Dieser lagert sich bevorzugt in dem Verdampfungsbereich 15 an der Wand im Bereich der Heizeinrichtung 4 an. Bei weiteren Verdampfungsvorgängen kann dann ein Teil dieser Kalkschicht 11 wieder abplatzen. Ohne eine erfindungsgemäße Auffangeinrichtung 2 könnte dieser Kalk 11 sich in dem Bereich der Zufuhr 5 ansammeln und diese über kurz oder lang sogar völlig verstopfen. Auch ein Verstopfen des Verdampfungsbereichs ist denkbar. Dadurch ist es bei herkömmlichen Dampferzeugern notwendig, diese von Zeit zu Zeit zu entkalken.

Diese lästige Wartungsarbeit entfällt bei Systemen mit einer erfindungsgemäßen Auffangeinrichtung 9. Diese wird vorteilhafter Weise, insbesondere aber wenn die Auffangeinrichtung 9 nicht wechselbar ausgestaltet ist, so groß ausgelegt, dass sie die in einer bestimmten Zeit erwartete Menge an Reststoff 10, insbesondere Kalk 11, aufnehmen kann.

Die erwartete Menge an Kalk 11 ist eben die Menge, die über die gesamte Lebensdauer des Gargerätes zu erwarten ist. Um die ausreichende Größe der Auffangeinrichtung 9 zu ermitteln, müssen verschiedene Parameter berücksichtigt werden. Man muss die Durchschnittliche Häufigkeit der Verwendung der Dampffunktion auf die Durchschnittliche Lebenserwartung des entsprechenden Gargerätes 1 hochrechnen. Unter weiterer Berücksichtigung von zum Beispiel der Wasserhärte ergibt sich die Menge an Kalk 11 die mindestens von der Auffangeinrichtung 9 aufgenommen werden muss, um ein Entkalken der Verdampfungseinrichtung 2 zu vermeiden. Sollte dennoch mehr Kalk 11 entstehen, als von der Auffangeinrichtung 9 aufgenommen werden kann, kann wie schon zu Figur 3 beschrieben auch eine austauschbare Auffangeinrichtung 9 vorgesehen sein.

In Figur 5 ist eine mögliche Ausführung eines vorteilhaften Vorratsbehälters 22 dargestellt. Dieser ist in diesem Fall als separates Teil aus durchsichtigem Plexiglas gefertigt. Auch andere Ausgestaltungen in Bezug auf Form und Material sind denkbar. Der hier dargestellte Vorratsbehälter 22 kann mittels zweier Fixierungsstäben 30 in dafür vorgesehene Aussparungen in den Backofen eingesteckt werden. Die Aussparungen dafür sind zweckmäßig an der Vorderseite des Gargerätes 1 und können sich zwischen dem Bedienfeld 25 und der Tür 24 befinden. Dadurch kann ein Benutzer den Wassertank ohne Schwierigkeiten an der Vorderseite des Gargerätes 1 anbringen.

Die Öffnung 31 in dem Vorratsbehälter 22 ist derart ausgestaltet, dass beim Aufstecken des Vorratsbehälters 22 ein hier nicht näher gezeigtes Ventil geöffnet wird, das zum Beispiel den Abschluss der Zuführeinrichtung 19 darstellen kann. Dadurch könnte die Wasseraufnahme aus dem Tank realisiert werden.

### Bezugszeichenliste

- 1: Gargerät
- 2: Verdampfungseinrichtung
- 3: Garraum
- 4: Heizeinrichtung
- 5: Zufuhr
- 6: Flüssigkeit
- 7: Abfuhr
- 8: Dampf
- 9: Auffangeinrichtung
- 10: Reststoff
- 11: Kalk
- 12: Heizquelle
- 13: Töpfchen
- 14: Becher
- 15: Verdampfungsbereich
- 16: Heizwendel
- 17: Sensor
- 18: Tröpfchenabscheider
- 19: Zuführeinrichtung
- 20: Pumpe
- 21: Flüssigkeitsmenge
- 22: Vorratsbehälter
- 23: Backofen
- 24: Tür
- 25: Bedienfeld
- 26: hinter Wand
- 27: Gehäuse
- 28: Schlauch
- 29: Gewinde
- 30: Stab
- 31: Öffnung

## Patentansprüche

1. Gargerät (1) mit wenigstens einer Verdampfungseinrichtung (2) zum Bedampfen wenigstens eines Garraumes (3), wobei die wenigstens eine Verdampfungseinrichtung (2) wenigstens eine Heizeinrichtung (4), wenigstens eine Zufuhr (5) für Flüssigkeiten (6) und wenigstens eine Abfuhr (7) für Dampf (8) umfasst, wobei die Abfuhr (7) dazu geeignet und ausgebildet ist, den Dampf (8) wenigstens teilweise in den wenigstens einen Garraum (3) zu führen, wobei
der Heizeinrichtung (4) eine Auffangeinrichtung (9) für wenigstens einen Reststoff (10), insbesondere für Kalk (11), zugeordnet ist, **dadurch gekennzeichnet, dass** die Auffangeinrichtung in der Art eines Töpfchens (13), eines Bechers (14) oder eines Kastens ausgebildet und austauschbar an der Verdampfungseinrichtung (2) befestigt ist.

2. Gargerät (1) nach Anspruch 1,
**dadurch gekennzeichnet,**
**dass** der wenigstens eine Garraum (3) über wenigstens eine Heizquelle (12) thermisch beheizbar ist, wobei wenigstens eine Heizquelle einer Gruppe von Heizquellen entnommen ist, die Unterhitze-, Oberhitze-, Heißluft-, Grill- oder Mikrowellenheizquellen umfasst.

3. Gargerät (1) nach einem der vorhergehenden Ansprüche, **dadurch gekennzeichnet,**
**dass** die Auffangeinrichtung (9) dazu geeignet und ausgebildet ist, wenigstens die in einer vorbestimmten Zeit erwartete Menge des wenigstens einen Reststoffs (10) aufzunehmen.

4. Gargerät (1) nach einem der vorhergehenden Ansprüche,
**dadurch gekennzeichnet,**
**dass** die Heizeinrichtung (4) einem im Wesentlichen von unten nach oben verlaufenden Verdampfungsbereich (15) beheizt.

5. Gargerät (1) nach einem der vorhergehenden Ansprüche,
**dadurch gekennzeichnet,**
**dass** die Heizeinrichtung (4) wenigstens eine Heizwendel (16) umfasst und insbesondere außen an dem Verdampfungsbereich (15) angeordnet ist.

6. Gargerät (1) nach einem der vorhergehenden Ansprüche,
**dadurch gekennzeichnet,**
**dass** der Heizeinrichtung (4) wenigstens ein Sensor (17) zugeordnet ist.

7. Gargerät (1) nach einem der vorhergehenden Ansprüche,
**dadurch gekennzeichnet,**
**dass** dem Verdampfungsbereich (15) wenigstens ein Tröpfchenabscheider (18) zugeordnet ist.

8. Gargerät (1) nach einem der vorhergehenden Ansprüche,
**dadurch gekennzeichnet,**
**dass** die Auffangeinrichtung (2) unterhalb der Heizeinrichtung (4) und/oder unterhalb der Zufuhr (5) für Flüssigkeiten (6) angeordnet ist.

9. Gargerät (1) nach einem der vorhergehenden Ansprüche,
**dadurch gekennzeichnet,**
**dass** die Zufuhr (5) für Flüssigkeiten (6) unterhalb der Heizeinrichtung (4) angeordnet ist und wobei eine Zuführeinrichtung (19) mit einer Pumpe (20) vorgesehen ist, über die eine vorbestimmte Flüssigkeitsmenge (21) der Verdampfungseinrichtung (2) zuführbar ist.

10. Gargerät nach einem der vorhergehenden Ansprüche,
**dadurch gekennzeichnet,**
**dass** die Zuführeinrichtung einen Vorratsbehälter (22) umfasst, der an das Gargerät ansteckbar ist.

## Claims

1. Cooking appliance (1) comprising at least one evaporation device (2) for filling at least one cooking chamber (3) with steam, the at least one evaporation device (2) comprising at least one heating device (4), at least one inlet (5) for liquids (6) and at least one outlet (7) for steam (8), the outlet (7) being suitable and designed for at least partially guiding the steam (8) into the at least one cooking chamber (3), a collecting device (9) for at least one residue (10), in particular for lime (11), being associated with the heating device (4), **characterised in that** the collecting device is formed in the manner of a pot (13), a cup (14) or a box, and is fastened to the evaporation device (2) in a replaceable manner.

2. Cooking appliance (1) according to claim 1, **characterised in that** the at least one cooking chamber (3) can be thermally heated by means of at least one heat source (12), at least one heat source being selected from a group of heat sources comprising bottom heat, top heat, hot air, grill or microwave heat sources.

3. Cooking appliance (1) according to any of the preceding claims, **characterised in that** the collecting device (9) is suitable and designed for receiving at least the amount of the at least one residue (10) that is expected in a predetermined time period.

4. Cooking appliance (1) according to any of the preceding claims, **characterised in that** the heating device (4) heats an evaporation region (15) which substantially extends from the bottom to the top.

5. Cooking appliance (1) according to any of the preceding claims, **characterised in that** the heating device (4) comprises at least one heating coil (16) and in particular is arranged on the exterior of the evaporation region (15).

6. Cooking appliance (1) according to any of the preceding claims, **characterised in that** at least one sensor (17) is associated with the heating device (4).

7. Cooking appliance (1) according to any of the preceding claims, **characterised in that** at least one droplet separator (18) is associated with the evaporation region (15).

8. Cooking appliance (1) according to any of the preceding claims, **characterised in that** the collecting device (2) is arranged below the heating device (4) and/or below the inlet (5) for liquids (6).

9. Cooking appliance (1) according to any of the preceding claims, **characterised in that** the inlet (5) for liquids (6) is arranged below the heating device (4), a supply device (19) being provided with a pump (20) by means of which a predetermined amount (21) of liquid can be supplied to the evaporation device (2).

10. Cooking appliance according to any of the preceding claims, **characterised in that** the supply device comprises a storage container (22) which can be attached to the cooking appliance.

## Revendications

1. Appareil de cuisson (1) comportant au moins un dispositif d'évaporation (2) pour permettre la vaporisation d'au moins une chambre de cuisson (3), dans lequel l'au moins un dispositif d'évaporation (2) comprend au moins un dispositif de chauffage (4), au moins une alimentation (5) en liquides (6) et au moins une évacuation (7) pour la vapeur (8), l'évacuation (7) étant appropriée et conçue pour guider la vapeur (8) au moins partiellement dans l'au moins une chambre de cuisson (3), un dispositif collecteur (9) d'au moins une matière résiduaire (10), en particulier de la chaux (11), étant associé au dispositif de chauffage (4), **caractérisé en ce que** le dispositif collecteur est conçu sous la forme d'un pot (13), d'un gobelet (14) ou d'une boîte, et est fixé sur le dispositif d'évaporation (2) de manière à pouvoir être remplacé.

2. Appareil de cuisson (1) selon la revendication 1, **caractérisé en ce que** l'au moins une chambre de cuisson (3) peut être chauffée thermiquement par au moins une source de chaleur (12), au moins une source de chaleur faisant partie d'un groupe de sources de chaleur qui comprend des sources de chaleur inférieure, supérieure, à air chaud, grill ou micro-ondes.

3. Appareil de cuisson (1) selon l'une des revendications précédentes, **caractérisé en ce que** le dispositif collecteur (9) est approprié et conçu pour recevoir au moins la quantité de l'au moins une matière résiduaire (10) prévue dans un temps prédéterminé.

4. Appareil de cuisson (1) selon l'une des revendications précédentes, **caractérisé en ce que** le dispositif de chauffage (4) chauffe une zone d'évaporation (15) s'étendant sensiblement de bas en haut.

5. Appareil de cuisson (1) selon l'une des revendications précédentes, **caractérisé en ce que** le dispositif de chauffage (4) comprend au moins un filament chauffant (16), et est disposé en particulier à l'extérieur de la zone d'évaporation (15).

6. Appareil de cuisson (1) selon l'une des revendications précédentes, **caractérisé en ce qu'**au moins un capteur (17) est associé au dispositif de chauffage (4).

7. Appareil de cuisson (1) selon l'une des revendications précédentes, **caractérisé en ce qu'**au moins un dispositif antibuée (18) est associé à la zone d'évaporation (15).

8. Appareil de cuisson (1) selon l'une des revendications précédentes, **caractérisé en ce que** le dispositif collecteur (2) est disposé sous le dispositif de chauffage (4) et/ou sous l'alimentation (5) en liquides (6).

9. Appareil de cuisson (1) selon l'une des revendications précédentes, **caractérisé en ce que** l'alimentation (5) en liquides (6) est disposée sous le dispositif de chauffage (4), et dans lequel un dispositif d'alimentation (19) doté d'une pompe (20) est prévu, dispositif par lequel une quantité prédéterminé de liquide (21) peut être acheminée au dispositif d'évaporation (2).

10. Appareil de cuisson selon l'une des revendications précédentes, **caractérisé en ce que** le dispositif d'alimentation comprend un récipient de stockage (22) qui peut être fixé à l'appareil de cuisson.
